(19) Europäisches Patentamt
European Patent Office
Office européen des brevets

(11) **EP 3 415 213 B1**

(12) **EUROPÄISCHE PATENTSCHRIFT**

(45) Veröffentlichungstag und Bekanntmachung des Hinweises auf die Patenterteilung:
**23.12.2020 Patentblatt 2020/52**

(51) Int Cl.:
***B01D 29/11*** *(2006.01)* ***B01D 29/21*** *(2006.01)*
***B01D 46/52*** *(2006.01)*

(21) Anmeldenummer: **18185865.5**

(22) Anmeldetag: **17.08.2012**

(54) **FILTERELEMENT**

FILTER ELEMENT

ÉLÉMENT FILTRANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.09.2011 DE 102011113649**

(43) Veröffentlichungstag der Anmeldung:
**19.12.2018 Patentblatt 2018/51**

(62) Dokumentnummer(n) der früheren Anmeldung(en) nach Art. 76 EPÜ:
**12748223.0 / 2 758 146**

(73) Patentinhaber: **Mann+Hummel GmbH**
**71636 Ludwigsburg (DE)**

(72) Erfinder:
• **Walz, Stefan**
**71691 Freiberg (DE)**
• **Schön, Mario**
**71364 Winnenden (DE)**

(74) Vertreter: **Nickolaus, Mathias**
**Mann+Hummel International GmbH & Co. KG**
**Schwieberdinger Straße 126**
**71636 Ludwigsburg (DE)**

(56) Entgegenhaltungen:
**EP-A2- 0 429 805    DE-A1- 19 735 993**
**JP-U- H0 570 607    US-A- 5 089 202**
**US-B1- 7 625 418**

## Beschreibung

### Technisches Gebiet

Die Erfindung betrifft ein Filterelement insbesondere einer Brennkraftmaschine insbesondere eines Kraftfahrzeugs mit einem Filtermedium aus einer Medienbahn, die aus mehreren Schichten besteht und entlang von Knicklinien gefaltet ist.

### Stand der Technik

Aus der WO 2010/106087 A1 ist ein Filterelement zur Entfernung von Partikeln aus einem Fluidstrom, insbesondere von Partikeln aus einem Kraftstoffstrom einer Brennkraftmaschine, bekannt. Das Filterelement umfasst eine obere Endscheibe, eine untere Endscheibe und ein dazwischen angeordnetes, ringförmiges, sternförmig gefaltetes Filtermedium. Zur Herstellung wird ein mehrschichtiges, bahnförmiges Filtermedium verwendet, das zu dem Filterelement gefaltet wird. Bei dem bahnförmigen Filtermedium liegen insbesondere die einzelnen Lagen lose aufeinander. Das Filtermedium wird mittels einer Zuführeinrichtung einer wärmeeintragenden Prägeeinheit, insbesondere Ultraschall-Prägeeinheit, zugeführt, die Knicklinien in das Filtermedium prägt. Das Filtermedium wird anschließend entlang der Knicklinien mittels einer Falteinrichtung gefaltet. Schichten des mehrschichtigen Filtermediums werden beim prägen entlang der Knicklinien mithilfe der wärmeeintragenden Prägeeinheit verschweißt.

Dokument DE 197 35 993 A1 offenbart ein Filterelement, welches eine sternförmige zickzack-gefaltete Filterbahn aufweist, wobei die Filterbahn aus Metall- oder Glasfasern mit Vorprägungen besteht. Das Glasfaservlies kann ein- oder beidseitig mit Polyesterfasern kaschiert bzw. beschichtet werden, wodurch eine Prägung durchführbar ist.

Der Erfindung liegt die Aufgabe zugrunde, ein Filterelement der eingangs genannten Art auszugestalten, mit dem die Schichten des bahnförmigen Filtermediums einfach und präzise miteinander verbunden und gefaltet werden können und das fertig gefaltete Filterelement eine noch höhere Stabilität und Filtereffizienz aufweist.

### Offenbarung der Erfindung

Diese Aufgabe wird erfindungsgemäß durch ein Filterelement gemäß Anspruch 1 gelöst. Erfindungsgemäß ist also das Filtermedium in wenigstens einem Abschnitt zu wenigstens einem weiteren Funktionsbereich geprägt. Bei den Schichten des mehrschichtigen Filtermediums kann es sich um Lagen unterschiedlicher oder gleicher Materialien handeln. Außerdem sind die Schichten des Filtermediums entlang der Prägungen des wenigstens einen weiteren Funktionsbereichs stoffschlüssig miteinander verbunden. Bei den stoffschlüssigen Verbindungen, insbesondere Schweiß-, Schmelz- oder Klebeverbindungen, werden die Verbindungspartner durch atomare oder molekulare Kräfte zusammengehalten. Die stoffschlüssigen Verbindungen sind dauerhaft und robust gegenüber Umwelteinflüssen. Mit der Prägung und der zusätzlichen stoffschlüssigen Verbindung wird die Stabilität des Filtermediums im gefalteten Zustand erhöht. Ferner wird durch die Kombination von Prägung und stoffschlüssiger Verbindung die Funktionalität des Filterelements, insbesondere die Filtrationsleistung und/oder die Standzeit und/oder die Stabilität und/oder eine Druckdifferenz zwischen Reinseite und Rohseite des Filtermediums, verbessert. Dadurch, dass lediglich im Bereich der Prägungen stoffschlüssige Verbindungen und in anderen Abschnitten die Schichten des Filtermediums lose aneinander liegen können, kann eine Gesamtfläche des Filtermediums, welche durch Prägungen und Verbindungen bezüglich eines Fluiddurchflusses beeinträchtigt sein können, minimal gehalten. Auf diese Weise wird die zur Filtration aktive Fläche des Filtermediums optimiert. Ferner kann vorteilhafterweise die Prägung und die stoffschlüssige Verbindung in einem Prozessschritt durchgeführt werden, so dass der Herstellungsaufwand reduziert werden kann. Durch die Kombination von Prägung und stoffschlüssiger Verbindung können ferner unterschiedlichste Filterschichten, insbesondere aus unterschiedlichen Materialien und/oder unterschiedlichen Aufbau und/oder unterschiedliche Dimension, miteinander kombiniert werden. Es können vorteilhafterweise zwei und mehr Schichten geprägt und stoffschlüssig miteinander verbunden sein.

Bei einer vorteilhaften Ausführungsform können die Knicklinien geprägt und die Schichten des mehrschichtigen Filtermediums entlang der Prägungen stoffschlüssig miteinander verbunden sein. Durch die Prägung der Knicklinien kann das Falten verbessert, insbesondere vereinfacht und präzisiert, werden kann. Mit der Prägung und der zusätzlichen stoffschlüssigen Verbindung entlang der Knicklinien kann die Stabilität des Filtermediums im gefalteten Zustand weiter erhöht werden. Alternativ können vorteilhafterweise die Knicklinien geprägt sein ohne stoffschlüssige Verbindung. Es kann vorteilhafterweise auch eine stoffschlüssige Verbindung ohne Prägung der Knicklinien realisiert sein.

Der wenigstens eine weitere Funktionsbereich ist eine Abstandsnoppe und/oder Stabilisierungsnoppe. Mit der wenigstens einen Abstandsnoppe können die bei gefalteten Filtermedium benachbarten flächigen Abschnitten zueinander beabstandet gehalten werden. Auf diese Weise kann verhindert werden, dass die flächigen Abschnitte direkt aneinander anliegen können, was die Durchströmung des Filtermediums beeinträchtigen würde. Vorteilhafterweise kann in jedem oder jedem zweiten Abschnitt jeweils wenigstens eine Abstandsnoppe vorgesehen sein. Zwischen zwei benachbarten Knicklinien ist eine Mehrzahl von Abstandsnoppen vorgesehen. Ferner können vorteilhafterweise in benachbarten Abschnitten einander entsprechende Abstandsnoppen gespiegelt zu einer jeweiligen Ebene, die eine Knicklinie enthält und senkrecht zur ungefalteten Filtermediumbahn verläuft, ausgestaltet sein. Die gespiegelten Abstandsnoppen können bei gefaltetem Filtermedium aneinander anliegen. Auf diese Weise kann die Abstandshaltung verbessert werden. Vorteilhafterweise kann die wenigstens eine Abstandsnoppe die Form eines halben Zylindermantels aufweisen. Alternativ kann vorteilhafterweise die wenigstens eine Abstandsnoppe die Form eines halben Kegelmantels haben. Dies hat den Vorteil, dass die Abstandsnoppe die Keilform der Falten bei gefaltetem Filtermedium ausgleichen kann. Die Abstandsnoppe kann so über ihre Länge an einer gegenüberliegenden Faltenfläche oder einer etwa gegenüberliegenden anderen Abstandsnoppe anliegen. Die Achse des Zylindermantels bzw. des Kegelmantels kann vorteilhafterweise senkrecht zu den Knicklinien verlaufen. Die wenigstens eine Abstandsnoppe kann ferner den flächigen Abschnitt, in dem sie angeordnet ist, stabilisieren.

Bei einer weiteren vorteilhaften Ausführungsform können die Schichten des mehrschichtigen Filtermediums entlang der wenigstens einen Prägung laminiert, kalandriert, verschweißt, verschmolzen oder verklebt sein. Auf diese Weise ist eine einfache stoffschlüssige Verbindung zwischen den Schichten realisierbar.

Das Filtermedium ist zickzackförmig gefaltet. Ein zickzackförmig gefaltetes Filtermedium kann einfach zu einem geschlossenen Filterelement, insbesondere einem Rundfilterelement, geformt werden. Alternativ kann ein zickzackförmig gefaltetes Filterelement einfach zu einem Flachfilterelement geformt werden.

Ferner kann vorteilhafterweise wenigstens eine, vorzugsweise zwei, der Schichten des mehrschichtigen Filtermediums aus synthetischem Material sein. Synthetische Materialien können einfach mittels einem energieeintragenden Prägeverfahren geprägt und gleichzeitig stoffschlüssig miteinander oder auch mit einem andersartigen, auch nicht synthetischen Material verbunden werden. Synthetische Materialien können robust sein. Mit ihnen können hohe Standzeiten realisiert werden. Sie können einfach hergestellt und recycelt werden.

Wenigstens eine der Schichten des mehrschichtigen Filtermediums weist ein Gitter, vorzugsweise ein Kunststoffgitter, auf Gitter erhöhen die Stabilität des Filtermediums. Kunststoff kann mit der energieeintragenden Prägeeinheit einfach erwärmt, geprägt und mit den restlichen Schichten stoffschlüssig verbunden, insbesondere verschweißt, werden.

Wenigstens eine der Schichten des mehrschichtigen Filtermediums weist eine Meltblownlage auf. Durch die dreidimensionale Speicherstruktur der Meltblownlage kann eine sehr gute Filtrationsleistung erreicht werden, was die Standzeiten des Filterelements erhöhen kann. Meltblownlagen können einfach geformt, geprägt und stoffschlüssig verbunden, insbesondere verschweißt, werden.

Einer weiteren vorteilhaften Ausführungsform können die Schichten mittels eines energieeintragenden Verfahrens, insbesondere mittels Ultraschallprägung, geprägt und stoffschlüssig miteinander verbunden sein. Mit einem energieeintragenden Verfahren können einfach die Prägung und die stoffschlüssige Verbindung gleichzeitig realisiert werden.

In einer Ausführungsform können bei dem Filtermedium in Durchströmungsrichtung eine Vorfilterlage und eine Feinfilterlage aneinandergefügt sein, wobei auf der Rohseite der Vorfilterlage eine erste Stützlage und auf der Reinseite der Feinfilterlage eine zweite Stützlage zur Aufnahme der Längs- bzw. Querkräfte bei Zug- oder Druckbeanspruchung aufgebracht sein können, wobei die beiden Stützlagen jeweils unterschiedliche durchschnittliche maximale Zugkräfte in Längs- bzw. Querrichtung aufweisen können. Als Längsrichtung ist dabei die Richtung definiert, in welcher das insbesondere bahnförmige und vorzugsweise rechteckige Filtermedium seine größte Länge aufweist, insbesondere die Vorschubrichtung bei der Herstellung des Filtermediums. Als Querrichtung ist die Richtung definiert, welche entlang der Breite des Filtermediums, senkrecht zur Längsrichtung verläuft und entlang welcher das Filtermedium vorzugsweise gefaltet wird. Die unterschiedlichen Festigkeiten haben den Vorteil, dass durch diese in Längs- und Querrichtung der Längenunterschied der äußeren Lagen um die neutrale Lage in der Mitte bei evtl. Umlenkungen beim Laminations-, Rollenschneide-, Präge- und Aufstellprozess ausgeglichen wird und somit die Verarbeitbarkeit verbessert oder in bestimmten Medienkonfigurationen erst sicher gestellt wird. Die für die Verbindung von Faltenbalg und Endscheibe des Filterelements notwendige Steifigkeit, die beim Verschweißen des Filtermediums mit einer thermoplastischen Endscheibe oder beim Eintauchen des Filtermediums in einen zähflüssigen Klebstoff erforderlich ist, wird vorteilhaft mittels der Stützlage zur Aufnahme der Querkräfte erreicht.

Des Weiteren können die Stützlagen in entsprechenden Ausführungsformen vorteilhaft die Funktion einer Drainage zur Verhinderung der Paketierung des Filtermediums erfüllen. Ein weiterer Vorteil der Stützlagen besteht dabei in der Möglichkeit, die Falten "auf Block" fahren zu können, da aufgrund der dadurch aneinander liegenden Stützlagen der Durchfluss gewährleistet ist.

Bei Messungen zur Bestimmung von Eigenschaften bei Zugbeanspruchung wird im Allgemeinen, jeweils getrennt für die Maschinenlaufrichtung (Längsrichtung) und die Querrichtung die breitenbezogene Bruchkraft nach DIN EN ISO 1924-2 über die folgende Gleichung bestimmt:

$$\sigma^b_T = \frac{\bar{F}_t}{b}$$

wobei $\bar{F}_t$ den Mittelwert der maximalen Zugkraft in Newton und b die Anfangsbreite der Probe in Millimeter bezeichnet. Normgemäß beträgt b=15 mm und die Länge der Probe mindestens 180 mm. Zur Bestimmung der mittleren maximalen Zugkraft sind mindestens 10 Zugversuche erforderlich. Im Folgenden wird als Materialkennwert der Mittelwert der maximalen Zugkraft in Newton $\bar{F}_t$ angegeben. Da normgemäß die Breite b von 15 mm als feste Versuchsgröße definiert wird, kann daraus jederzeit die breitenbezogene Bruchkraft errechnet werden.

Als weiterer Materialkennwert wird im Folgenden die breitenbezogene Biegesteifigkeit S bestimmt nach DIN 53121 verwendet. Die Norm sieht verschiedene Messverfahren vor, vorzugsweise wird eine rechteckige Probe mit der Breite b entlang einer Breite eingespannt und im Abstand I von der Einspannung mit einer Kraft F belastet, wodurch sich eine maximale Durchbiegung f als Verschiebung des Kraftangriffspunktes ergibt. Die breitenbezogene Biegesteifigkeit S errechnet sich daraus zu

$$ S = \frac{F}{f} * \frac{l^3}{3b}. $$

In einer Ausführungsform kann die durchschnittliche maximale Zugkraft der die Querkräfte aufnehmenden Stützlage des Filtermediums in Längsrichtung größer 10 N betragen.

In einer vorteilhaften Ausführungsform kann die durchschnittliche maximale Zugkraft der die Querkräfte aufnehmenden Stützlage des Filtermediums in Querrichtung größer 20 N betragen.

In einer Ausführungsform kann die durchschnittliche maximale Zugkraft der die Längskräfte aufnehmenden Stützlage des Filtermediums in Längsrichtung größer 20 N betragen.

In einer vorteilhaften Ausführungsform kann die durchschnittliche maximale Zugkraft der die Längskräfte aufnehmenden Stützlage des Filtermediums in Querrichtung größer 10 N betragen.

In einer Ausführungsform kann die breitenbezogene Biegesteifigkeit der die Querkräfte aufnehmenden Stützlage des Filtermediums in Längsrichtung größer 0,1 N · mm, insbesondere größer 0,15 N · mm, betragen.

In einer Ausführungsform kann die breitenbezogene Biegesteifigkeit der die Querkräfte aufnehmenden Stützlage des Filtermediums in Querrichtung größer 0,3 N · mm, insbesondere größer 0,4 N · mm, betragen.

In einer vorteilhaften Ausführungsform kann die breitenbezogene Biegesteifigkeit der die Längskräfte aufnehmenden Stützlage des Filtermediums in Längsrichtung größer 0,3 N · mm, besonders bevorzugt größer 0,45 N · mm, betragen.

In einer Ausführungsform kann die breitenbezogene Biegesteifigkeit der die Längskräfte aufnehmenden Stützlage des Filtermediums in Querrichtung größer 0,1 N · mm, besonders bevorzugt größer 0,15 N · mm, betragen.

In einer Ausführungsform können die Stützlagen jeweils in Form eines Gitters ausgebildet sein, welches sich kreuzende Fäden aufweisen kann, wobei die kreuzenden Fäden einen Fadenwinkel aufspannen können.

In einer Ausführungsform kann der Fadenwinkel der für die Aufnahme der Querkräfte zuständigen Stützlage des Filtermediums im Bereich von 70° bis 120°, bevorzugt im Bereich von 80° bis 100°, besonders bevorzugt bei 90°, liegen.

In einer Ausführungsform kann der Fadenwinkel der für die Aufnahme der Längskräfte zuständigen Stützlage des Filtermediums im Bereich von 40° bis 80°, insbesondere im Bereich von 50° bis 70°, liegen.

In einer Ausführungsform kann die Vorfilterlage des Filtermediums aus einer Meltblownlage mit einer Dicke im Bereich von 0,1 mm bis 1 mm und einem Flächengewicht im Bereich von 10 g/m$^2$ bis 200 g/m$^2$ gebildet werden.

In einer Ausführungsform kann die Dicke der Meltblownlage des Filtermediums zwischen 0,2 mm und 0,4 mm und das Flächengewicht zwischen 90 g/m$^2$ und 110 g/m$^2$ betragen.

In einer Ausführungsform kann der Faserdurchmesser der Vorfilterlage und/oder der Feinfilterlage des Filtermediums im Bereich von 0,1 $\mu$m bis 10 $\mu$m liegen.

In einer Ausführungsform können die Vorfilterlage und/oder die Feinfilterlage des Filtermediums hergestellt sein aus Materialien ausgewählt aus der Gruppe bestehend aus Polybutylenterephthalat (PBT) -Meltblown, Polyamid(PA)-Meltblown, Polypropylen(PP)-Meltblown und Polyethersulfon (PES)-Meltblown.

In einer Ausführungsform kann die Feinfilterlage des Filtermediums aus einer Meltblownlage mit einer Dicke im Bereich von 0,1 mm bis 1,5 mm und einem Flächengewicht im Bereich von 10 g/m$^2$ bis 200 g/m$^2$ gebildet werden.

In einer Ausführungsform kann die Dicke der Meltblownlage des Filtermediums zwischen 0,6 mm und 1,0 mm und das Flächengewicht zwischen 90 g/m$^2$ und 110 g/m$^2$ liegen.

In einer Ausführungsform kann das Filtermedium zusätzlich eine dritte Filterlage aufweisen.

In einer Ausführungsform kann die dritte Filterlage des Filtermediums aus einer Meltblownlage mit einer Dicke im Bereich von 0,1 mm bis 1 mm und einem Flächengewicht im Bereich von 10 g/m$^2$ bis 100 g/m$^2$ gebildet werden.

In einer Ausführungsform kann die Dicke der Meltblownlage des Filtermediums zwischen 0,2 mm und 0,4 mm und das Flächengewicht zwischen 30 g/m$^2$ und 60 g/m$^2$ betragen.

In einer Ausführungsform kann die dritte Filterlage des Filtermediums hergestellt sein aus Materialien ausgewählt aus der Gruppe bestehend aus Polybutylenterephthalat (PBT)-Meltblown, Polyamid(PA)-Meltblown, Polypropylen(PP)-Meltblown und Polyethersulfon(PES)-Meltblown.

In einer Ausführungsform kann der Faserdurchmesser der dritten Filterlage des Filtermediums im Bereich von 0,1 μm bis 10 μm liegen.

In einer Ausführungsform kann die dritte Filterlage als Absolutabscheider ausgebildet sein.

In einer Ausführungsform können die Stützlagen und/oder die Feinfilterlage und/oder die Vorfilterlage aus einer Kombination bestehen, ausgewählt aus der Gruppe bestehend aus Gitter-Spunbond, Spunbond-Spunbond, Spunbond-Filterlagen und Gitter-Filterlagen. Bei dem Spunbond kann es sich um ein Spinnvlies handeln.

In einer Ausführungsform können die Filterlagen und/oder Feinfilterlage und/oder Vorfilterlage aus trockengelegtem Vlies, insbesondere Krempelvlies, und/oder aus nassgelegtem Vlies bestehen.

In einer Ausführungsform kann eine Filterlage und/oder Feinfilterlage und/oder Vorfilterlage hergestellt sein aus Materialien, ausgewählt aus einer Gruppe bestehend aus synthetischen Polymeren, vorzugsweise Polybutylenterephthalat (PBT), Polyamid (PA), Polyethersulfon (PES), Polyethylenterephthalat (PET), und/oder aus natürlichen Polymeren und/oder Mischungen daraus.

Die anergieeintragende Prägeeinheit ist ausgestaltet zum Prägen und zum stoffschlüssigen Verbinden von Schichten des mehrschichtigen Filtermediums entlang wenigstens eines Funktionsbereichs in wenigstens einem Abschnitt des Filtermediums zwischen benachbarten Knicklinien. Die oben in Verbindung mit dem erfindungsgemäßen Filterelement aufgezählten Merkmale und Vorteile gelten für die Vorrichtung und deren vorteilhafte Ausgestaltungen entsprechend und umgekehrt.

Die energieeintragende Prägeeinheit ist so ausgestaltet, dass sie gleichzeitig das Filtermedium prägt und die Schichten dort miteinander stoffschlüssig verbindet, insbesondere verschweißt. Das Filtermedium wird so entlang des wenigstens einen weiteren Funktionsbereichs dauerhaft insbesondere robust gegenüber Umwelteinflüssen laminiert. Auf diese Weise wird die Stabilität des Filtermediums im gefalteten Zustand erhöht. Außerdem wird durch die definierte und stabile Verbindung der Schichten das anschließende Falten erleichtert und verbessert. Insbesondere werden die Schichten derart miteinander verschweißt, dass die Verbundfestigkeit an den Verbindungs- bzw. Schweißlinien der Schichten mindestens so groß ist, wie die Materialfestigkeit innerhalb der einzelnen Schichten. Vorteilhafterweise kann die energieeintragende Prägeeinheit ausgestaltet sein zum Prägen der Knicklinien und/oder stoffschlüssigen Verbinden der Schichten des mehrschichtigen Filtermediums entlang der Knicklinien. Auf diese Weise kann das Falten weiter erleichtert und verbessert werden.

Vorzugsweise kann als energieeintragende Prägeeinheit eine Ultraschall-Prägeeinheit verwendet werden. Jedoch kann die Energie alternativ auch mittels Thermokalander, Laser oder weiteren Energiequellen eingebracht werden.

Bei einer vorteilhaften Ausführungsform kann vorgesehen sein, dass Schichten des mehrschichtigen Filtermediums vor dem Prägen nicht miteinander verbunden sind. Auf einen vorhergehenden Arbeitsgang zum Verbinden, insbesondere Laminieren, der Schichten kann so verzichtet werden. Die Schichten liegen als separate Lagen bis zum Prägeprozess entspannt flächig aneinander und sind relativ zueinander verschiebbar. Spannungen zwischen den Schichten, die beim Prägen und beim Falten auftreten können, werden so einfach ausgeglichen. Dadurch werden der Prägevorgang und der Faltvorgang vereinfacht.

Bei einer weiteren vorteilhaften Ausführungsform kann der energieeintragenden Prägeeinheit eine Aufstelleinheit nachgeordnet sein zur zickzackförmigen Faltung des bahnförmigen Filtermediums. Das Filtermedium kann mit der Aufstelleinheit direkt im Anschluss an das Prägen und stoffschlüssige Verbinden, insbesondere Verschweißen, gefaltet werden. So können die Schichten sich einfach nach jeder Prägung einer Knicklinie zueinander ausrichten, um Spannungen abzubauen, was den Faltprozess weiter vereinfacht und die Präzision erhöht.

Bei einer weiteren vorteilhaften Ausführungsform kann die energieeintragende Prägeeinheit eine Ambosswalze mit Prägestegen, eine ultraschallbetriebene Sonotrode und einen Prägestempel, der insbesondere von der Sonotrode zumindest mit gebildet ist, aufweisen. Auf diese Weise kann einfach in einem kontinuierlichen Verfahren das bahnförmige Filtermedium in einem Arbeitsschritt geprägt und verschweißt werden. Vorteilhafterweise kann auch eine andersartige energieeintragende Prägeeinheit insbesondere mit einem mit dem bahnförmigen Filtermedium mitfahrenden Ultraschallstempel oder einer rotierenden Ultraschallsonotrodenwalze verwendet werden.

Vorteilhafterweise kann in Transportrichtung des Filtermediums vor und hinter der Ambosswalze jeweils eine insbesondere angetriebene Nippwalze angeordnet sein. Die Positionen der Nippwalzen relativ zur Ambosswalze sind veränderbar, um einen Einlaufwinkel und einen Auslaufwinkel über die Ambosswalze einzustellen. Angetriebene Nippwalzen können ferner dem Transport der Filtermediumbahnen dienen. Vorteilhafterweise kann die Geschwindigkeit der Nippwalzen eingestellt werden. Die Nippwalzen können in Position und/oder Geschwindigkeit an die Eigenschaften der Filtermediumbahn, insbesondere Materialzusammensetzung, Schichtdicken und/oder Abmessungen, angepasst werden, um eine optimale Prägung und stoffschlüssige Verbindung, insbesondere Verschweißung, zu ermöglichen.

Schichten des mehrschichtigen Filtermediums werden entlang wenigstens eines Funktionsbereichs in wenigstens einem Abschnitt des Filtermediums zwischen benachbarten Knicklinien mit der energieeintragenden Prägeeinheit geprägt und beim Prägen stoffschlüssig verbunden. Vorteilhafterweise können mit der energieeintragenden Prägeeinheit zusätzlich die Knicklinien in das bahnförmige Filtermedium geprägt werden und/ oder die Schichten des mehrschichtigen Filtermediums entlang der Knicklinien stoffschlüssig verbunden werden. Die oben in Verbindung mit dem erfindungsgemäßen Filterelement und der erfindungsgemäßen Vorrichtung aufgezählten Merkmale und Vorteile gelten für das Verfahren und dessen vorteilhafte Ausgestaltungen entsprechend und umgekehrt.

Bei einer vorteilhaften Ausgestaltung des Verfahrens kann das Filtermedium mittels einer Ambosswalze mit Prägestegen, einer ultraschallbetriebenen Sonotrode und einem Prägestempel, der insbesondere von der Sonotrode zumindest mit gebildet ist, geprägt und stoffschlüssig verbunden, insbesondere verschweißt, werden.

Vorteilhafterweise kann das mehrschichtige Filtermedium nach dem Prägen und stoffschlüssigen Verbinden, insbesondere Verschweißen, mit einer Aufstelleinheit zickzackförmig gefaltet werden.

## Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen:

Figur 1　schematisch eine Vorrichtung gemäß einem ersten Ausführungsbeispiel zum zickzackförmigen Falten einer dreischichtigen Filtermediumbahn;

Figur 2　schematisch eine Detailansicht einer Ultraschall-Prägeeinheit der Vorrichtung aus der Figur 1;

Figur 3　schematisch eine Detailansicht der mit der Ultraschall-Prägeeinheit aus der Figur 2 geprägten und verschweißten Filtermediumbahn;

Figur 4　eine isometrische Darstellung eines mit der Vorrichtung aus der Figur 1 hergestellten zickzackförmig gefalteten Filterelements gemäß einem ersten Ausführungsbeispiel;

Figur 5　eine Detailansicht des Filterelements aus der Figur 4;

Figur 6　schematisch eine Vorrichtung gemäß einem zweiten Ausführungsbeispiel zum zickzackförmigen Falten der dreischichtigen Filtermediumbahn, welche zu dem ersten Ausführungsbeispiel aus der Figur 1 ähnlich ist;

Figur 7　eine isometrische Darstellung eines mit der Vorrichtung aus der Figur 1 hergestellten zickzackförmig gefalteten runden Filterelements gemäß einem zweiten Ausführungsbeispiel;

Figur 8　einen Ausschnitt der Filtermediumbahn aus den Figuren 1 bis 7 in Draufsicht;

Figur 9　einen Schnitt der Filtermediumbahn aus der Figur 8 entlang der dortigen Schnittlinie IX-IX;

Figur 10　einen Ausschnitt einer Filtermediumbahn gemäß einem zweiten Ausführungsbeispiel, welche zu der Filtermediumbahn aus den Figuren 1 bis 9 ähnlich ist, in Draufsicht;

Figur 11　einen Schnitt der Filtermediumbahn aus der Figur 10 entlang der dortigen Schnittlinie XI-XI.

In den Figuren sind gleiche Bauteile mit gleichen Bezugzeichen versehen.

## Ausführungsform(en) der Erfindung

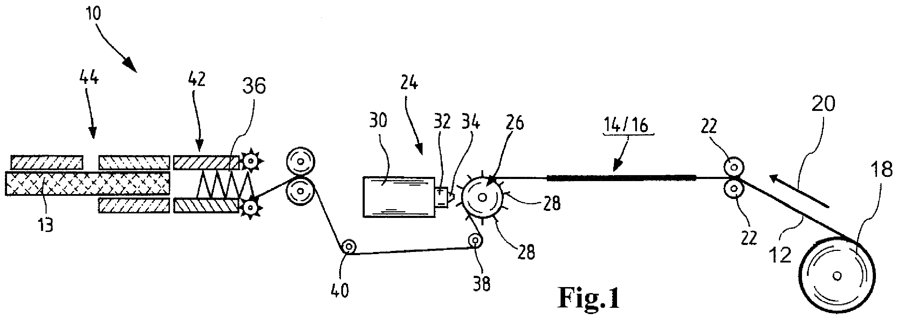

In der Figur 1 ist eine Vorrichtung 10 zum zickzackförmigen Falten einer mehrschichtigen Filtermediumbahn 12 eines Filterelements 13 gezeigt.

Das Filterelement 13 wird verwendet zur Filtrierung von flüssigen oder gasförmigen Fluiden, beispielsweise Motoröl, Kraftstoff, Verbrennungsluft oder Druckluft, in Kraftfahrzeugen.

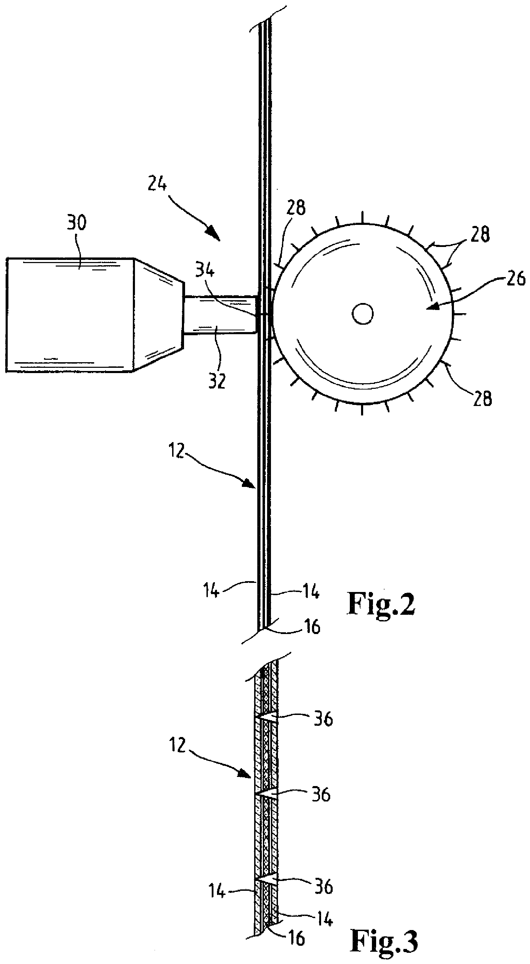

Die Filtermediumbahn 12 besteht, wie in den Figuren 2 und 3 gezeigt, aus drei Schichten oder Lagen, die zunächst lose aneinander liegen. Die beiden äußeren Schichten bestehen aus Kunststoffgittern 14. Zwischen den Kunststoffgittern 14 ist eine Meltblownlage 16 angeordnet, die die mittlere Schicht bildet. Alternative Ausführungsformen sehen zwei oder mehr Schichten vor. Die endlose Filtermediumbahn 12 wird von einer Rolle 18 in Förderrichtung, angedeutet durch einen Pfeil 20, abgerollt und zwischen zwei Transportrollen 22 hindurchgeführt. Die Filtermediumbahn 12 wird, ohne dass sie vorher eigens erwärmt wird, einer Ultraschall-Prägeeinheit 24 zugeführt.

Die Ultraschall-Prägeeinheit 24 verfügt über eine Ambosswalze 26, welche umfangsseitig mit einer Vielzahl von Prägestegen 28 ausgestattet ist. Die Prägestege 28 sind in gleichmäßigen Abständen entlang des Umfangs der Ambosswalze 26 verteilt angeordnet. Die Prägestege 28 können auch in ungleichmäßigen Abständen entlang des Umfangs der Ambosswalze 26 verteilt angeordnet sein. Sie erstrecken sich jeweils axial zur Ambosswalze 26, in radialer Richtung. Die Ausdehnung der Prägestege 28 in Umfangsrichtung beträgt jeweils etwa 0,5 mm bis 2 mm. Die radial äußeren Oberflächen der Prägestege 28 sind glatt. Durch ungleichmäßige Abstände der Prägestege 28 sind sich ändernde Faltenhöhen realisierbar.

Ferner weist die Ultraschall-Prägeeinheit 24 eine Ultraschalleinheit 30 auf, mit der Ultraschall in hier nicht weiter interessierender Weise in eine Sonotrode 32 eingeleitet wird. Die Ultraschalleinheit 30 mit der Sonotrode 32 befindet sich neben der Ambosswalze 26. Die Sonotrode 32 bildet einen Prägestempel, welcher mit dem Prägestegen 28 der Ambosswalze 26 zusammenwirkt.

Die Filtermediumbahn 12 wird zwischen der Ambosswalze 26 und der Sonotrode 32 hindurch bewegt. In Transportrichtung 20 vor der Ambosswalze 26 können sich die Kunststoffgitter 14 und die Meltblownlage 16 relativ zueinander verschieben. Auf diese Weise werden mechanische Spannungen zwischen den Schichten abgebaut.

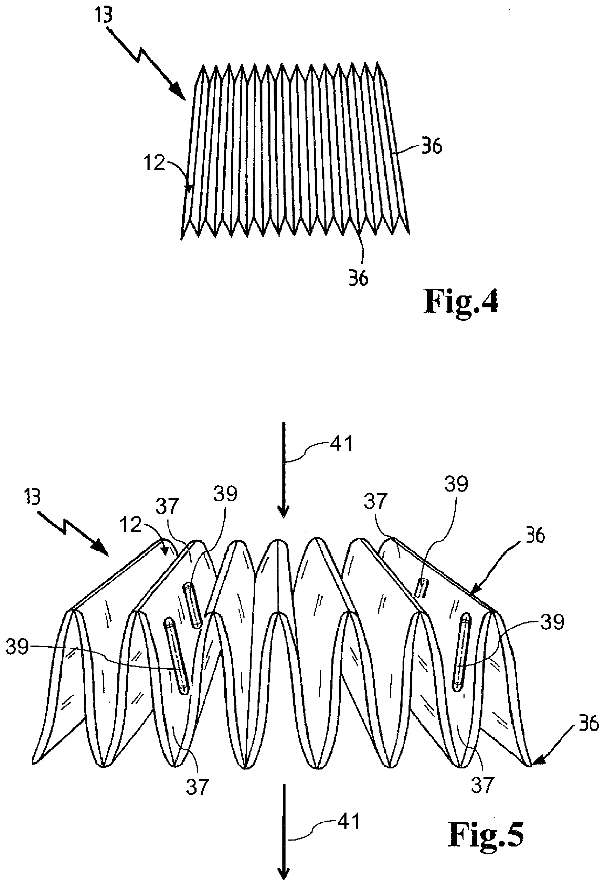

Während des Transports der Filtermediumbahn 12 durch die Ultraschall-Prägeeinheit 24 führt die Einleitung von Ultraschall an einer Spitze 34 der Sonotrode 32 zum Erwärmen der Filtermediumbahn 12 in den durch die Prägestege 28 definierten Bereichen. Die so geprägten Bereiche bilden Knicklinien 36 für das anschließende Falten der Filtermediumbahn 12. Die Knicklinien 36 sind in der Figur 3 im Detail und bei einem fertigen Filterelement 13 in den Figuren 4 und 5 gezeigt. Eine Durchströmrichtung des zu reinigenden Fluids durch das Filterelement 13 ist in Figur 5 angedeutet durch Pfeile 41. Die Anströmseite, also die Rohseite, des Filterelements 13 befindet sich in der Figur 5 oben. Die Abströmseite, also die Reinseite, des Filterelements 13 ist in Figur 5 unten.

Die Höhen der Prägestege 28 in radialer Richtung, der Abstand zwischen der Spitze 34 der Sonotrode 32 und den Prägestegen 28 und die mittels der Sonotrode 32 auf die Filtermediumbahn 12 abgegebene Energie sind auf die Eigenschaften der Filtermediumbahn 12, beispielsweise die Materialart, die Schichtdicken und die Gesamtdicke abgestimmt, um gleichzeitig mit dem Prägevorgang die Kunststoffgitter 14 und die Meltblownlage 16 mit der Sonotrode 32 entlang der Knicklinie 36 zu verschweißen und so stoffschlüssig zu verbinden.

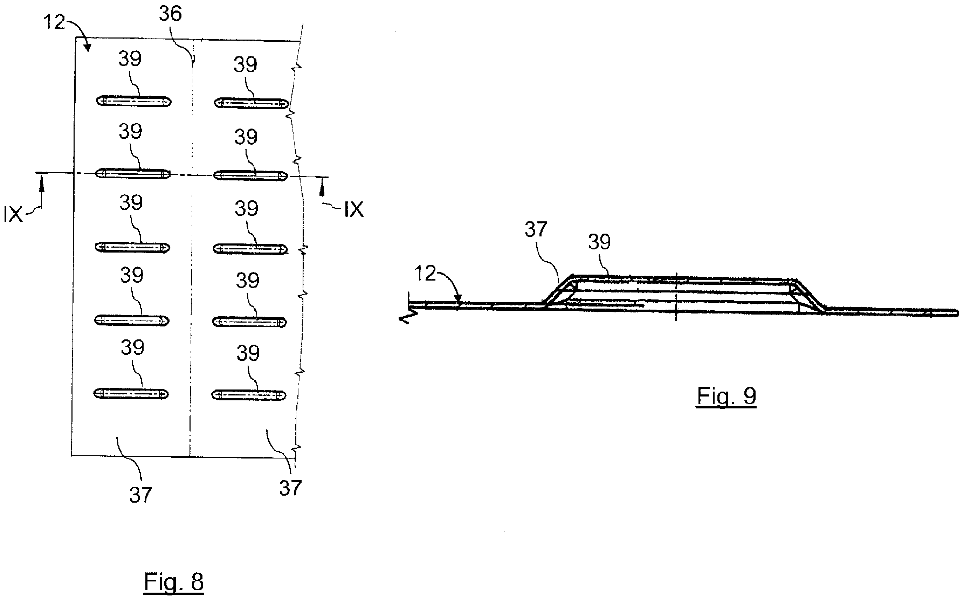

Ferner wird während des Transports der Filtermediumbahn 12 durch die Ultraschall-Prägeeinheit 24 die Spitze 34 der Sonotrode 32 in den flächigen Abschnitten 37 zwischen benachbarten Knicklinien 36 zum prägen von Abstandsnoppen 39 an der Filtermediumbahn 12 entlang geführt. Durch die Einleitung von Ultraschall an der Spitze 34 der Sonotrode 32 werden die Kunststoffgitter 14 und die Meltblownlage 16 mit dem prägen der Abstandsnoppen 39 verschweißt und so stoffschlüssig verbunden. In Figur 5 sind beispielhaft nur vier der Abstandsnoppen 39 gezeigt. In Wirklichkeit ist, wie in Figur 8 gezeigt, in jedem Abschnitt 37 eine Mehrzahl von Abstandsnoppen 39 angeordnet.

In der Figur 8 ist ein Ausschnitt der Filtermediumbahn 12 in Draufsicht gezeigt. Die Figur 9 zeigt eine der Abstandsnoppen 39 im Schnitt. In jedem Abschnitt 37 zwischen jeweils zwei der Knicklinien 36 ist eine Mehrzahl von Abstandsnoppen 39 angeordnet. Die Abstandsnoppen 39 in einem Abschnitt 37 sind in Querrichtung der Filtermediumbahn 12, also in Richtung der Knicklinien 36, nebeneinander angeordnet. Die Abstandsnoppen 39 haben jeweils die Form eines halben Zylindermantels. Die virtuelle Achse des Zylindermantels liegt etwa in der Ebene des entsprechenden Abschnitts 37. Sie verläuft quer zu den Knicklinien 36. Die Abstandsnoppen 39 sind in Form und Dimension identisch. Es können aber auch unterschiedliche Abstandsnoppen 39 vorgesehen sein.

Der Verlauf der Abstandsnoppen 39 kann in einem beliebigen Winkel zwischen 0° und 135° zu den Knicklinien 36 verlaufen, vorzugsweise im Bereich von 90° ± 45°.

In benachbarten flächigen Abschnitten 37 der Filtermediumbahn 12, deren Oberflächen beim Falten einander zugewandt sind, sind die Abstandsnoppen 39 jeweils paarweise gespiegelt zu der dazwischenliegenden Knicklinie 36 angeordnet. Bei der gefalteten Filtermediumbahnen 12 liegen die Erhebungen der einander entsprechenden, gespiegelten Abstandsnoppen 39 aneinander und halten die Faltenflächen in einem Abstand zueinander.

Zwischen den Knicklinien 36 und den Abstandsnoppen 39 sind die Kunststoffgitter 14 und die Meltblownlage 16 nicht miteinander verbunden und können sich weiterhin relativ zueinander ausrichten. Mechanische Spannungen in der geprägten und verschweißten Filtermediumbahn 12 können so beim späteren Faltprozess einfacher abgebaut werden, so dass eine unerwünschte Faltenbildung zwischen den Knicklinien 36 vermieden wird und der Faltprozess einfacher und präziser vonstattengeht. Außerdem wird so vermieden, dass die Kunststoffgitter 14 und die Meltblownlage 16 beim Faltprozess voneinander abgehoben und getrennt werden. Die Verwendung einer einzigen Sonotrode 32 trägt dabei zur Vermeidung von mechanischen Spannungen und Falten in der Filtermediumbahn 12 bei.

In Förderrichtung 20 hinter der Ultraschall-Prägeeinheit 24 wird die geprägte und verschweißte Filtermediumbahn 12 über eine Umlenkrolle 38 und eine Umlenkrolle 40 bei Raumtemperatur einer Aufstelleinheit 42 zugeführt. In der Aufstelleinheit 42 wird die Filtermediumbahn 12 in hier nicht weiter interessierender Weise zickzackförmig gefaltet und zu den Filterelementen 13 geschnitten.

Die Filterelemente 13 werden anschließend einer hier nicht weiter interessierenden Faltenspitzenheizung 44 zugeführt und erhitzt.

Mit der Vorrichtung 10 können Faltgeschwindigkeiten von 700 Falten pro Minute und mehr erreicht werden.

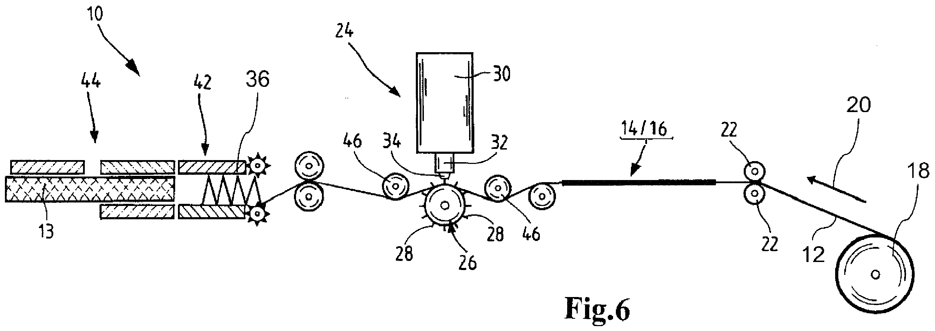

Bei einem zweiten Ausführungsbeispiel, dargestellt in Figur 6, sind diejenigen Elemente, die zu denen des ersten, in den Figuren 1 bis 5 beschriebenen Ausführungsbeispiels ähnlich sind, mit denselben Bezugszeichen versehen, so dass bezüglich deren Beschreibung auf die Ausführungen zum ersten Ausführungsbeispiel Bezug genommen wird. Dieses Ausführungsbeispiel unterscheidet sich vom ersten dadurch, dass in Förderrichtung 20 vor und hinter der Ambosswalze 26 zusätzlich jeweils eine drehend angetriebene Nippwalze 46 angeordnet ist, die dem Transport der Filtermediumbahn 12 dienen. Auf die Umlenkrollen 38 und 40 wird hier verzichtet. Außerdem befindet sich beim zweiten Ausführungsbeispiel die Ultraschalleinheit 30 mit der Sonotrode 32 oberhalb der Ambosswalze 26.

Die Nippwalzen 46 sind in ihrer vertikalen Position relativ zur Ambosswalze 26 einstellbar, so dass mit ihnen ein Einlaufwinkel und ein Auslaufwinkel über die Ambosswalze 26 eingestellt werden kann. Die Positionen und die Geschwindigkeiten der Nippwalzen 46 werden abhängig von den Eigenschaften der Filtermediumbahn 12 so eingestellt, dass eine optimale Prägung, Verschweißung und Faltung erfolgt. Für einige Medien können auch nicht angetriebene Nippwalzen vorteilhaft sein.

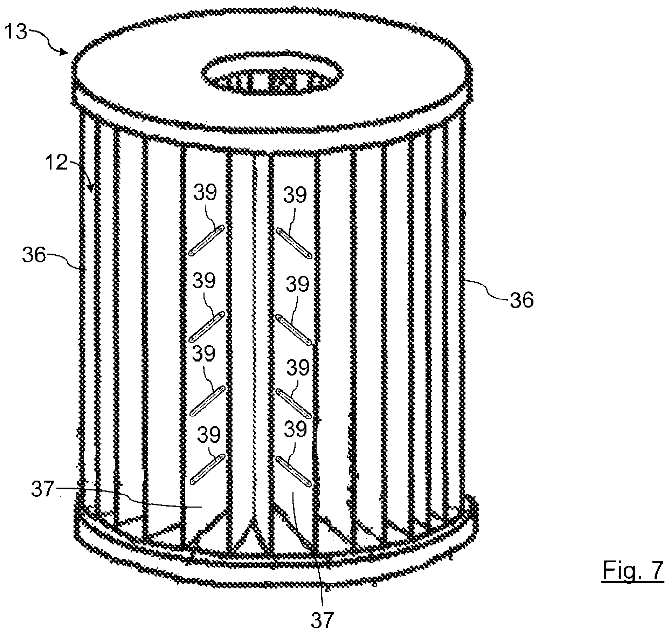

In der Figur 7 ist ein zweites Ausführungsbeispiel eines Filterelements 13 gezeigt. Im Unterschied zu dem ersten Ausführungsbeispiel ist das Filterelement 13 beim zweiten Ausführungsbeispiel in Form eines Rundfilterelementes ausgestaltet. Die Filtermediumbahn 12 aus den Figuren 1 bis 3, 8 und 9 ist hier ringförmig, sternförmig gefaltet und geschlossen. An ihren Stirnseiten ist jeweils eine hier nicht weiter interessierende Endscheibe angeordnet. Auch hier sind in jedem flächigen Abschnitt 37 eine Mehrzahl von Abstandsnoppen 39 angeordnet, von denen in der Figur 7 der besseren Übersichtlichkeit wegen lediglich einige wenige gezeigt sind.

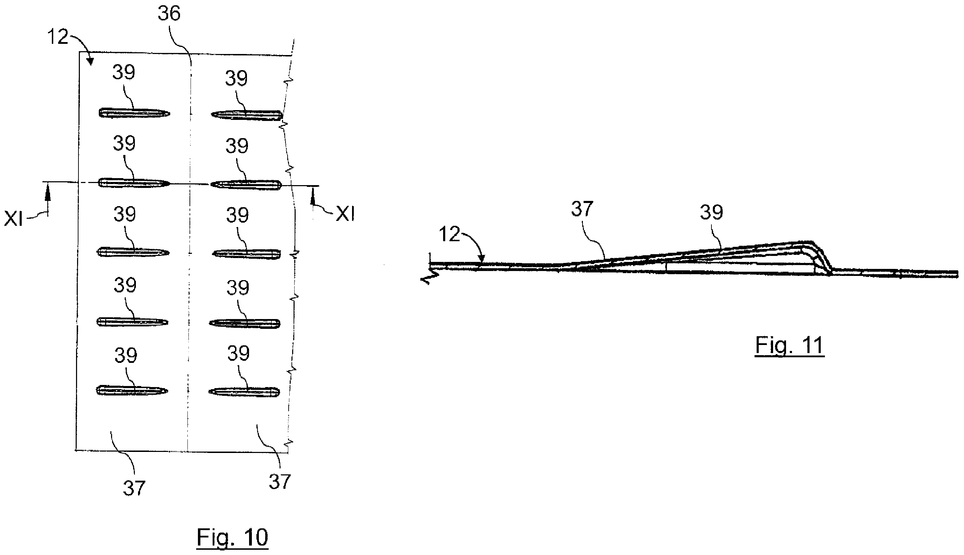

In den Figuren 10 und 11 ist ein zweites Ausführungsbeispiel einer Filtermediumbahn 12 gezeigt, bei der die Abstandsnoppen 39 die Form eines halben Kegelmantels haben. Die Spitzen der Kegel der Abstandsnoppen 39, die zu einer Knicklinie 36 enthaltenen Ebene senkrecht zur Filtermediumbahn 12 gespiegelt sind und bei gefalteter Filtermediumbahn 12 aneinanderliegen, zeigen zueinander. Bei der gefalteten Filtermediumbahnen 12 liegen die einander entsprechenden Abstandsnoppen 39 über ihre axiale Länge aneinander an.

Bei allen oben beschriebenen Ausführungsbeispielen eines Filterelements 13, einer Vorrichtung 10 und eines Verfahrens zur Herstellung eines zickzackförmig gefalteten Filterelements 13 sind unter anderem folgende Modifikationen möglich:
Die Vorrichtung 10 und das Verfahren sind nicht beschränkt auf die Herstellung von zickzackförmig gefalteten Filtermediumbahnen 12 für Filterelemente 13 im Kraftfahrzeugbereich. Vielmehr können sie auch in anderen technischen Bereichen, beispielsweise in der Industrie bei Filtern für Industriemotoren oder Kompressoren oder in der Wassertechnik, verwendet werden.

Statt mittels Ultraschallprägen können die Schichten der Filtermediumbahn 12 auch mittels einem andersartigen energieeintragenden Verfahren geprägt und stoffschlüssig miteinander verbunden werden. Statt miteinander verschweißt können die Schichten auch in anderer Weise stoffschlüssig miteinander verbunden werden. Die Schichten können beispielsweise auch laminiert, kalandriert, verschmolzen oder verklebt werden.

Anstelle der Ultraschall-Prägeeinheit 24 mit einer rotierenden Ambosswalze 26 kann auch eine andersartige Ultraschall-Prägeeinheit verwendet werden. Beispielsweise kann eine mit der Filtermediumbahn mitfahrende Sonotrode oder eine auf einer Walze ausgebildete rotierende Sonotrode, beispielsweise eine Ultraschallsonotrodenwalze, eingesetzt werden.

Anstelle der dreischichtigen Filtermediumbahn 12 kann auch eine Filtermediumbahn mit mehr oder weniger als drei Schichten mit der Vorrichtung 10 gemäß dem Verfahren geprägt, stoffschlüssig verbunden und gefaltet werden. Beispielsweise kann auch ein Verbund aus zwei Gitterlagen und zwei Meltblownlagen verwendet werden.

Anstelle der Filtermediumbahn 12 mit zwei Kunststoffgittern 14 und einer Meltblownlage 16 können auch andersartige mehrschichtige Filtermediumbahnen, beispielsweise aus Zellulosemedien mit auflaminiertem Meltblown, Vlies mit auflaminierten Gittern, Glasfasermedien, beispielsweise kaschiertem Glasfasermedium mit Gitter, oder Luftfiltervlies, mit der Vorrichtung 10 geprägt, stoffschlüssig verbunden, insbesondere verschweißt, und gefaltet werden. Es können Filtermediumbahnen mit wenigstens einer Schicht oder Lage aus einem synthetischen Material verwendet werden. Es können auch alle Schichten bzw. Lagen der Filtermediumbahn aus synthetischem Material sein.

Es können auch Filtermediumbahnen, welche in einem vorherigen Arbeitsgang miteinander verbunden werden, mit der Ultraschall-Prägeeinheit 24 entlang der Knicklinien 36 und/oder entlang der Abstandsnoppen 39 geprägt und stabil formschlüssig verbunden, insbesondere verschweißt, werden. Beispielsweise können in einem solchen vorigen Arbeitsgang bei einer Filtermediumbahn aus fünf Einzellagen die beiden Meltblownlagen beispielsweise mittels Polyurethan (PUR)-Schmelzklebstoff im Sprühauftrag auflaminiert werden. Anschließend können die beiden Kunststoffgitter beispielsweise ebenfalls mittels PUR-Schmelzkleber auf die laminierten Meltblownlagen laminiert werden.

Die zwei oder mehr Schichten 14, 16 der Filtermediumbahn 12 können auch getrennt abgewickelt und erst über entsprechende Transportrollen 22 lose aneinandergelegt werden.
Statt in jedem Abschnitt 37 können beispielsweise auch nur in jedem zweiten Abschnitt 37 entsprechende Abstandsnoppen 39 angeordnet sein, welche direkt an den Faltflächen der jeweils anderen gegenüberliegenden Abschnitte 37 zur Abstandshaltung anliegen können. Die Abstandsnoppen können auch andere Form und/oder Orientierung haben.

Die Abstandsnoppen 39 können auch in einem Abschnitt 37 wechselseitig erhaben sein, so dass sich immer jede zweite Abstandsnoppe 39 im Anströmbereich und im Abströmbereich gegenüberliegen.

Zusätzlich oder alternativ zu den Abstandsnoppen 39 können auch andersartige Funktionsbereiche, beispielsweise Verstärkungsstege, in den Abschnitten 37 zwischen benachbarten Knicklinien 36 geprägt und stoffschlüssig miteinander verbunden sein.

Die Filtermediumbahn 12 kann auch beispielsweise mittels einer Einlaufheizung erhitzt werden, beispielsweise zur Laminierung der einzelnen Schichten, bevor sie der Ultraschall-Prägeeinheit 24 zugeführt wird.

Auf das Prägen und/oder stoffschlüssige Verbinden der Schichten 14, 16 entlang der Knicklinien 36 kann auch ganz oder teilweise verzichtet werden.

Die Ausdehnung der Prägestege 28 in Umfangsrichtung der Ambosswalze 26 kann auch größer oder kleiner als 1 mm sein.

Die radial äußeren Oberflächen der Prägestege 28 können statt glatt auch strukturiert sein.

Bei dem zweiten Ausführungsbeispiel der Vorrichtung können anstelle der angetriebenen Nippwalzen 46 auch nicht angetriebene Nippwalzen vorgesehen sein. Es kann auch nur eine der beiden Nippwalzen 46 angetrieben sein.

## Patentansprüche

1. Filterelement (13) insbesondere einer Brennkraftmaschine insbesondere eines Kraftfahrzeugs, mit einem Filtermedium (12) aus einer Medienbahn, die aus mehreren Schichten (14, 16) besteht und entlang von Knicklinien (36) gefaltet ist, **dadurch gekennzeichnet, dass** das Filtermedium (12) in wenigstens einem Abschnitt (37) zwischen zwei benachbarten Knicklinien (36) unter Ausbildung einer Mehrzahl von Abstandsnoppen (39) geprägt ist und die Schichten (14, 16) des mehrschichtigen Filtermediums (12) entlang der Prägung der Abstandsnoppen (39) stoffschlüssig miteinander verbunden sind, wobei das Filtermedium (12) zickzackförmig gefaltet ist und wobei wenigstens eine der Schichten des mehrschichtigen Filtermediums (12) ein Gitter, vorzugsweise ein Kunststoffgitter (14), aufweist und wenigstens eine der Schichten des mehrschichtigen Filtermediums (12) eine Meltblownlage (16) aufweist.

2. Filterelement nach Anspruch 1, **dadurch gekennzeichnet, dass** die Knicklinien (36) geprägt und die Schichten (14, 16) des mehrschichtigen Filtermediums (12) entlang der Prägungen der Knicklinien (36) stoffschlüssig miteinander verbunden sind.

3. Filterelement nach einem der vorigen Ansprüche, **dadurch gekennzeichnet, dass** die Schichten (14, 16) des mehrschichtigen Filtermediums (12) entlang der wenigstens einen Prägung laminiert, kalandriert, verschweißt, verschmolzen oder verklebt sind.

4. Filterelement nach einem der vorigen Ansprüche, **dadurch gekennzeichnet, dass** wenigstens eine, vorzugsweise zwei, der Schichten des mehrschichtigen Filtermediums (12) aus synthetischem Material ist.

5. Filterelement nach einem der vorigen Ansprüche, **dadurch gekennzeichnet, dass** die Schichten (14, 16) mittels eines energieeintragenden Verfahrens, insbesondere mittels Ultraschallprägung, geprägt und stoffschlüssig miteinander verbunden sind.

## Claims

1. Filter element (13), in particular of an internal combustion engine, in particular of a motor vehicle, having a filter medium (12) made of a medium web consisting of several layers (14, 16) and folded along bending lines (36), **characterized in that** the filter medium (12) is embossed by forming a plurality of spacer projections (39) in at least one portion (37) between two adjacent bending lines (36) and the layers (14, 16) of the multilayer filter medium (12) are firmly bonded to each other along the embossing of the spacer projections (39), wherein the filter medium (12) is zigzag-folded and wherein at least one of the layers of the multilayer filter medium (12) features a lattice, preferably a synthetic lattice (14), and at least one of the layers of the multilayer filter medium (12) features a meltblown layer (16).

2. Filter element according to claim 1, **characterized in that** the bending lines (36) are embossed and the layers (14, 16) of the multilayer filter medium (12) are firmly bonded to each other along the embossings of the bending lines (36).

3. Filter element according to one of the preceding claims, **characterized in that** the layers (14, 16) of the multilayer filter medium (12) are laminated, calendered, welded, fused or glued along the at least one embossing.

4. Filter element according to one of the preceding claims, **characterized in that** at least one, preferably two, of the layers of the multilayer filter medium (12) are made of a synthetic material.

5. Filter element according to one of the preceding claims, **characterized in that** the layers (14, 16) are embossed and firmly bonded to each other by means of an energy-introducing method, in particular by means of ultrasonic embossing.

## Revendications

1. Élément filtrant (13), notamment d'un moteur à combustion interne, notamment d'un véhicule automobile, ayant un milieu filtrant (12) constitué d'une bande de milieu consistant d'une pluralité de couches (14, 16) et pliée le long des lignes de pliage (36), **caractérisé en ce que** le milieu filtrant (12) est estampé en formant une pluralité de nopes d'espacement (39) dans au moins une section (37) entre deux lignes de pliage (36) voisines et les couches (14, 16) du milieu filtrant multicouche (12) sont reliées l'une à l'autre par liaison de matière le long des nopes d'espacement estampées (39), le milieu filtrant (12) étant plié en accordéon et au moins une des couches du milieu filtrant multicouche (12) présentant une grille, de préférence une grille en matière plastique (14), et au moins une des couches du milieu filtrant multicouche (12) présentant une couche fondue-soufflée (16).

2. Élément filtrant selon la revendication 1, **caractérisé en ce que** les lignes de pliage (36) sont estampées et les couches (14, 16) du milieu filtrant multicouche (12) sont reliées l'une à l'autre par liaison de matière le long des estampages des lignes de pliage (36).

3. Élément filtrant selon l'une des revendications précédentes, **caractérisé en ce que** les couches (14, 16) du milieu filtrant multicouche (12) sont stratifiées, calandrées, soudées, fusionnées ou collées le long de l'estampage, au moins au nombre d'un.

4. Élément filtrant selon l'une des revendications précédentes, **caractérisé en ce qu'au** moins une, de préférence deux des couches du milieu filtrant multicouche (12) sont en matériau synthétique.

5. Élément filtrant selon l'une des revendications précédentes, **caractérisé en ce que** les couches (12, 14) sont estampées au moyen d'un procédé apportant de l'énergie, notamment au moyen d'un estampage à ultrasons, et reliées l'une à l'autre par liaison de matière.

Fig.1

**Fig.2**

**Fig.3**

**Fig.4**

**Fig.5**

Fig.6

EP 3 415 213 B1

Fig. 7

12 36

39 39

39 39

IX 39 39 IX

37

39 39

39 39

39 39

37 37

Fig. 8

37 39

12

Fig. 9

EP 3 415 213 B1

Fig. 10

Fig. 11

EP 3 415 213 B1

**IN DER BESCHREIBUNG AUFGEFÜHRTE DOKUMENTE**

**In der Beschreibung aufgeführte Patentdokumente**

- WO 2010106087 A1
- DE 19735993 A1